# EUROPÄISCHE PATENTSCHRIFT

(11) **EP 1 463 964 B1**
(45) Veröffentlichungstag und Bekanntmachung des Hinweises auf die Patenterteilung: **01.09.2010**
(21) Anmeldenummer: 03709685.6
(22) Anmeldetag: 13.01.2003
(51) Int. Cl.: G02B 5/20

(54) **STRUKTIERTER FARBFILTER UND HERSTELLUNG EINES SOLCHEN**
STRUCTURED OPTICAL ELEMENT AND PRODUCTION OF THE SAME
ELEMENT OPTIQUE STRUCTURE ET SA REALISATION

(30) Priorität: 11.01.2002 DE 10200872
(43) Veröffentlichungstag der Anmeldung: 06.10.2004
(73) Patentinhaber: Oerlikon Trading AG, Trübbach, 9477 Trübbach (CH)
(72) Erfinder: HEINE-KEMPKENS, Claus, CH-7000 Chur (CH); ZÜGER, Othmar, FL-9495 Triesen (LI); HUNZIKER, Michael, CH-8640 Rapperswil (CH)
(74) Vertreter: nospat Patent- und Rechtsanwälte Naefe Oberdorfer Schmidt
(86) Internationale Anmeldenummer: PCT/EP2003/000244
(87) Internationale Veröffentlichungsnummer: WO 2003/065085

(56) Entgegenhaltungen:
- EP-A- 0 615 146
- EP-A- 0 947 858
- US-A- 3 771 857
- US-A- 4 029 394
- US-A- 4 355 866
- US-A- 5 140 396

## Beschreibung

Die Erfindung betrifft ein strukturiertes optisches Element nach Oberbegriff des Anspruchs 1 und ein Herstellverfahren für ein strukturiertes optisches Element nach Anspruch7.

Beispielsweise kann das strukturierte optische Element ein strukturierter Farbfilter sein, welches in monolitschen Farbrädern zum Einsatz kommt. Diese sind wichtige Komponenten für die Projektion von Farbbildern. Monolitisch bedeutet hierbei, dass die Oberfläche mindestens eines Substrates mit einer strukturierten Beschichtung versehen ist, derart, dass verschiedene Bereiche der Oberfläche dieses einen Substrates mit unterschiedlichen Funktionsschichten versehen sind, so dass die Oberfläche des Substrats, lokal begrenzt, mindestens zwei bestimmte optische Funktionen aufweist. Monolitische Farbräder sind daher von segmentierten Farbrädern zu unterscheiden. Bei letzteren werden zwei oder mehrere Substrate, deren Oberflächen jeweils flächendeckend mit nur einer Funktionsschicht versehen sind, zu einem Farbrad angeordnet.

Andererseits ermöglicht die Strukturierung der Oberfläche eines Substrates die Wahl von Strukturgrößen im Mikrometerbereich oder auch darunter. Solche mikrostrukturierten optischen Elemente finden heute breite Anwendung wiederum in der Projektionstechnik, etwa wenn es darum geht Licht derart auf ein bildgebendes Element (Lichtventil) fallen zu lassen, dass benachbarten Pixel mit Licht unterschiedlicher Wellenlängenbereiche auftreffen.

Mit der Strukturierung erreicht man, dass Licht, je nachdem in welchem Bereich es auf die Oberfläche trifft, in Abhängigkeit der jeweiligen Funktionsschicht z.B. reflektiert, transmittiert, absorbiert, gebeugt oder auf andere Weise gestreut wird. Wesentlich hierbei ist, dass mehrere Bereiche auf einem Substrat verwirklicht werden. Ein Bereich muß dabei nicht eine zusammenhängende Fläche bilden, sondern kann durchaus aus einer Vielzahl von nicht zusammenhängenden Flächen bestehen. Durch die Verwirklichung mehrerer Bereiche wird vermieden, dass mehrere Substrate nebeneinander angeordnet werden müssen.

Wie dies aus dem Stand der Technik bekannt ist, können solche strukturierten Beschichtungen mittels einer Kombination von flächiger Beschichtung und eines lithographischen Liftoffprozesses hergestellt werden, wie zum Beispiel von Sperger et al in US 6238583 beschrieben. Die Substrate werden zuerst gereinigt. Anschließend wird der Photo-Lack aufgebracht, maskiert, belichtet und entwickelt. Darauf wird die erste Beschichtung für die ersten Strukturen aufgebracht. Der Lack samt daraufliegender Beschichtung wird mit einem nass-chemischen Prozess weggelöst. Es bleibt daher lediglich an den Stellen die Beschichtung bestehen, die beim Aufbringen des Photolacks maskiert waren damit direkt auf das Substrat beschichtet wurde. Dann wird das Substrat für das Aufbringen des nächsten Schichtsystems gereinigt. Dieser Vorgang wiederholt sich für alle verschiedenen benötigten Funktionsschichten. Gibt es auf der strukturierten optischen Oberfläche Bereiche, die Licht lediglich transmittieren sollen, d.h. Bereiche in denen eine neutrale Funktionsschicht realisiert werden soll, so muss in den meisten Fällen in diesen Bereichen eine reflexionsmindernde Beschichtung, eine sogenannten Antireflex-Beschichtung (AR-Beschichtung), aufgebracht werden. Dabei ist dafür zu sorgen, dass lediglich der bisher unbeschichtete Bereich des Substrates mit der AR-Beschichtung versehen wird, denn wenn eine solche Beschichtung den Funktionsschichten der anderen Bereiche ohne weiteres überlagert wird, stört sie in der Regel deren optische Charakteristik. Daher wird auch für eine solche AR-Beschichtung der zuvor beschriebene Maskierungsprozess notwendig.

Solche Prozesse sind aufwendig und in der Regel mit Ausbeuten deutlich unter 100% behaftet. Als besonders nachteilig erweist sich die Tatsache, dass sämtliche dieser Prozesse gekoppelt sind. Hinzu kommt, dass an den Rändern der Bereiche die Beschichtungen anfällig gegen Umwelteinflüsse sind.

In DE 19641303 A1 wird ein Verfahren beschrieben, demgemäß zur Herstellung eines strukturierten optischen Elementes eine Ätzstoppschicht zunächst die gesamte optische Fläche bedeckt, auf der dann die Funktionsschicht appliziert und strukturiert wird. Explizit wird darauf hingewiesen, dass für Bereiche, in denen ein neutrales Element benötigt wird, die Stoppschicht, sofern diese aus MgF₂ besteht, als reflexmindernde Schicht wirkt. Außerdem wird darauf hingewiesen, dass das Design der Funktionsschichten die optische Wirkungsweise der Stoppschicht miteinbeziehen kann. Dies kann den für die neutralen Bereiche notwendigen Strukturierungsschritt ersetzen.

Allerdings ist MgF₂ ein Beschichtungsmaterial, das, insbesondere wenn zusätzliche Funktionsschichten aufgebracht werden, zu kosmetischen Problemen, wie zum Beispiel Schichtrissen, führen kann. Für die eigentlichen Funktionsschichten werden meist andere Beschichtungsmaterialien verwendet und mit Hilfe eines Liftoff-Prozesses kann meist ganz auf eine Ätzstoppschicht verzichtet werden. Insbesondere hat für viele Anwendungen die Einzelschicht MgF₂ nicht genügend reflexmindernde Eigenschaften. Aus diesem Grund liegt es nahe auf eine MgF₂ zu verzichten.

Ein weiterer Nachteil bei diesen bekannten Prozessen besteht darin, dass über die Liftoff-Technik ein wesentlicher Anteil der Beschichtung weggelöst wird. Dies macht die Beschichtung selbst ineffizient und teuer.

Natürlich kann man versuchen, vor der Strukturierung eine Antireflexbeschichtung mit herkömmlichen Materialien zu applizieren. Es zeigt sich aber, dass mit einem solchen Schichtsystem die Anpassung an die restlichen Funktionsschichten schwierig ist, da eine solche Beschichtung an den Übergang Substrat zu Luft und gleichzeitig Substrat zum restlichen Schichtsystem angepasst sein müsste. Außerdem liegen bei einer solchen Art der Strukturierung nach wie vor die Ränder frei. Die Umweltbeständigkeit eines solchen Filters ist daher in der Regel herabgesetzt.

Die US 3,771,857 schlägt einen dichroischen Filter vor, der aus einer Anzahl von schräg zueinander angeordneten, einander in mehreren Lagen überlagernden optischen Funktionsschichten aufgebaut ist. Um einen solchen Filter herzustellen sind eine ganze Reihe von nacheinander vorzunehmenden Maskierungs- und Ätzschritten erforderlich, was den Fertigungsaufwand erheblich erhöht.

Es ist die Aufgabe der vorliegenden Erfindung die Nachteile des Standes der Technik zu beseitigen. Es ist insbesondere die Aufgabe, die Zahl der Prozessschritte zur Herstellung des strukturierten Elements zu minimieren und soweit wie möglich zu entkoppeln um damit strukturierte optische Elemente herzustellen mit hoher Qualität insbesondere bezüglich optischer und mechanischer Eigenschaften und mit besonders hoher Wirtschaftlichkeit.

Erfindungsgemäß wird die Aufgabe gelöst durch die Merkmale, die von den Ansprüchen 1 und 7vorgeschlagen werden. Die abhängigen Ansprüche beziehen sich auf vorteilhafte weitere Ausgestaltungen.

Dem erfindungsgemäßen Vorgehen entsprechend werden die Schichtsysteme der Bereiche mit unterschiedlicher optischer Funktion jeweils in zwei Teilschichtsysteme unterteilt, wobei jeweils ein inneres Teilschichtsystem von Bereich zu Bereich unterschiedlich ist und ein ergänzendes Teilschichtsystem sämtliche Bereiche abdeckt. Erfindungsgemäß werden zunächst die inneren Teilschichtsysteme auf die unterschiedlichen Bereiche appliziert wobei diese jeweils pro Bereich einen Strukturierungsprozess erfordern. Anschließend wird das ergänzende Teilschichtsystem in einem Schritt in allen Bereichen ohne Strukturierungsprozess aufgebracht. Damit ist das ergänzende Teilschichtsystem zumindest Bestandteil der Schichtsysteme aller Bereiche. In einem der Bereiche kann damit die erforderliche optische Funktion durch ein Schichtsystem erreicht werden, das identisch mit dem ergänzenden Teilschichtsystem ist. Das erste Teilschichtsystem umfasst in diesem Bereich also keine Schicht und ein Strukturierungsprozess ist für diesen Bereich somit nicht mehr notwendig. Diese Möglichkeit ist gegeben, wenn das Substrat einen Bereich umfasst, in dem Licht effizient durch das Substrat transmittiert werden soll. Das ergänzende Teilschichtsystem wird dann als reflexmindernde Schicht ausgebildet.

Es ist eines der wesentlichen Merkmale der vorliegenden Erfindung, dass die inneren Teilschichtsysteme zwischen Substrat und ergänzendem Teilschichtsystem angeordnet sind. Dadurch sind bei der Herstellung sämtliche Strukturierungsprozesse der Applikation des alles überdeckenden ergänzenden Teilschichtsystems vorgelagert und können auf dieses keinen schädigenden Einfluss haben. Dünnfilm-Designstudien haben außerdem überraschend ergeben, dass sich ein solches gemeinsames Teilschichtsystem als abschließende Beschichtung leichter realisieren lässt als eine der Strukturierung vorgelagerte gemeinsame Beschichtung. Insbesondere erreicht man durch diese Reihenfolge dass das zuletzt gesamthaft applizierte Schichtsystem kontinuierlich die Oberfläche bedeckt und damit mechanischen Schutz bietet.

Ein solches Vorgehen erlaubt außerdem die Entkopplung sämtlicher Strukturierungsprozesse wenn für jeden Bereich mit nicht neutraler optischer Funktion jeweils ein Substrat mit dem dem jeweiligen Bereich entsprechenden strukturierten ersten Teilschichtsystem versehen wird. Diese Entkopplung bedeutet, dass auch die mit den einzelnen Strukturierungsprozessen jeweils verbundenen Ausbeuten entkoppelt sind und die mit dem Gesamtprozess verbundene Ausbeute erheblich gesteigert wird. Anschließend wird jeweils ein ergänzendes Teilschichtsystem gesamthaft aufgebracht, wobei dies jeweils in den noch nicht beschichteten Bereichen reflexmindernde Eigenschaften besitzt. Bei der Kombination der Substrate wird dann dafür gesorgt, dass maximal ein Bereich mit nicht neutraler optischer Funktion im optischen Weg liegt, wenn nicht der Effekt einer optischen Summenfunktion erzielt werden soll.

Die Erfindung wird anschließend beispielsweise und anhand von schematischen Figuren und Beispielen erläutert. Die Figuren zeigen:
- Fig.1: ein strukturiertes optisches Element bei dem beide Seiten des Substrates mit strukturierten Beschichtun- gen versehen wurden und die optische Funktion in den Bereichen jeweils als Summenfunktion aus der opti- schen Funktion beider Substratseiten resultiert, dar- gestellt im Querschnitt.
- Fig.2: Optisches Element zusammengesetzt aus drei einfach strukturierten Substraten.

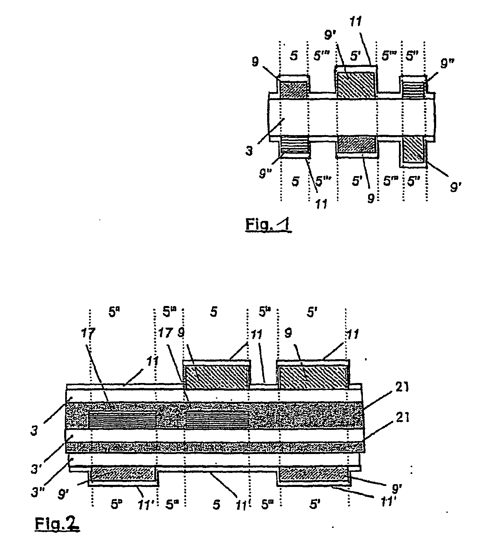

Als erstes erfindungsgemäßes Ausführungsbeispiel wird die Herstellung eines strukturierten optischen Elementes beschrieben das vier Bereiche 5, 5' , 5", 5"' umfasst. Ein solches Element ist in Figur 1 dargestellt. Im ersten Bereich 5 wird ausschließlich blaues Licht transmittiert, im zweiten Bereich 5' wird grünes Licht transmittiert und im dritten Bereich 5" wird rotes Licht transmittiert, und im vierten Bereich 5"' wird das gesamte sichtbare Spektrum transmittiert. Ein solches optisches Element kann zum Beispiel ein Farbrad sein, wie es in Projektoren, die auf sequenzielle Farbaufteilung beruhen eingesetzt wird.

Zur Herstellung eines solchen Elementes werden zunächst die notwendigen Schichtdesigns ermittelt. Um ein derartiges Schichtsystem zu ermitteln kann z. B. ein Dünnfilmdesign -Optimierungsprogramm verwendet werden. Ein solches Optimierungsprogramm ist in der Regel in der Lage bei feststehenden Materialcharakteristika die Schichtzahl und die Dickenverteilung eines Schichtsystems im Bezug auf eine bestimmte Zielfunktion, die der gewünschten spektralen Charakteristik entspricht, zu optimieren. Solche Software ist dem Durchschnittsfachmann bekannt und kann käuflich erworben werden (z. B. ein Softwarepaket Namens Optilayer). Beim vorliegenden Filterkonzept ist der Einsatz einer solchen Software besonders gut zu verwenden. Zur Ermittlung von Schichtsystemen können aber auch teilweise analytische Verfahren zum Ziel führen.

Begonnen wird jetzt mit einem Schichtsystem das appliziert auf das Substrat eine reflexmindernde Wirkung hat. Dies entspricht der benötigten optisch neutralen Funktion des vierten Bereichs 5"'. Außerdem bildet dieses Schichtsystem das gemeinsame ergänzende Teilschichtsystem 11 der anderen Bereiche. Anschließend wird ein Schichtdesign ermittelt, das blaues Licht reflektiert und rotes und grünes Licht transmittiert.

Ein weiteres Design wird ermittelt, das grünes Licht reflektiert und blaues und rotes Licht transmittiert. Es wird außerdem ein Design ermittelt, das rotes Licht reflektiert und blaues und grünes Licht transmittiert. Bei der Designermittlung ist immer Randbedingung, dass die abschließenden Schichten dem ergänzenden Teilschichtsystem 11 entsprechen.

Nach der Ermittlung der Designdaten werden die nicht dem ergänzenden Teilschichtsystem 11 angehörenden Schichten der unterschiedlichen Bereiche mittels Beschichtungs- und Strukturierungsprozessen appliziert, d.h. im ersten Bereich wird das erste innere Teilschichtsystem 9 appliziert, im zweiten Bereich wird das zweite innere Teilschichtsystem 9' appliziert und im dritten Bereich wird ein drittes inneres Teilschichtsystem 9" appliziert. In einem weiteren Prozessschritt wird dann das ergänzende Teilschichtsystem 11 gesamthaft auf das Substrat 3 aufgebracht. Eine Oberfläche des Substrates 3 enthält jetzt also optisch neutrale Bereiche und Bereiche, in denen jeweils eine der Farben Rot, Blau oder Grün reflektiert werden. Mit der Rückseite des Substrates wird analog verfahren, wobei darauf geachtet wird, dass sich jeweils zwei Schichtsysteme gegenüberliegen, die entweder beide optisch neutral sind, d.h. sichtbares Licht transmittieren oder beide nicht optisch neutral sind dabei aber nicht dieselbe Farbe reflektieren. Beispielsweise wird im ersten Bereich 5 das zweite innere Teilschichtsystem 9' appliziert, im zweiten Bereich 5' das dritte innere Teilschichtsystem 9" appliziert und im dritten Bereich 5" das erste innere Teilschichtsystem 9 appliziert und anschließend wird gesamthaft das ergänzende Teilschichtsystem 11 aufgebracht. Damit entsteht ein Element mit Bereichen, die die geforderte optische Funktion aufweisen. Es ist jeweils ein Design für die für dieses Element benötigten Filter angegeben. Es wird angenommen, dass Licht senkrecht auf die Substratoberfläche trifft. Es wird von Luft als Einfallsmedium ausgegangen und von einem Substrat mit Index n= 1.5. Außerdem wird davon ausgegangen, dass für das hochbrechende Material ein Brechungsindex von n_{H} = 2.4 gültig ist, während für das niederbrechende Material ein Brechungsindex von n_{L} = 1.48 gilt. Es kann sich bei dem hochbrechenden Material um TiO₂ handeln, während das niederbrechende Material SiO₂ sein kann.

In einem weiteren erfindungsgemäßen Beispiel soll beschrieben werden, wie sich die zur Herstellung eines Farbrades notwendigen Strukturierungsprozesse mittels erfindungsgemäßem Vorgehen vollständig entkoppeln lassen. Dies ist auf der Basis von drei Substraten 3, 3', 3" möglich, wobei aber jeweils die Rückseite der Substrate nicht beschichtet werden muss. Eine schematische Darstellung des Elementes zeigt die Figur 2. Zunächst werden wiederum die für die Beschichtungen benötigten Designs ermittelt. Benötigt wird das Design der reflexmindernden Beschichtungen die gleichzeitig als ergänzende Teilschichtsysteme(11, 11') genommen werden können. Benötigt wird außerdem das Design eines ersten inneren Teilschichtsystems 9, das zusammen mit dem ergänzenden Teilschichtsystem 11 blaues Licht reflektiert. Benötigt wird außerdem das Design eines zweiten inneren Teilschichtsystems 9' das zusammen mit dem weiteren ergänzenden Teilschichtsystem 11' rotes Licht reflektiert. Zusätzlich wird das Design eines ausschließlich grünes Licht reflektierenden Schichtsystems 17 benötigt, wobei beim Design darauf zu achten ist, dass hier das Einfallsmedium nicht Luft ist, sondern beispielsweise ein optischer Kleber. Auf ein Substrat 3 wird nun erfindungsgemäß das erste inneres Teilschichtsystem 9 in den Bereichen 5, 5' appliziert, in denen blaues Licht reflektiert werden soll. Anschließend wird die strukturiert beschichtete Substratoberfläche mit dem zuvor ermittelten ergänzenden Teilschichtsystem 11 beschichtet, so dass nun die beschichtete Oberfläche des Substrates 3 in den Bereichen 5 und 5' blaues Licht reflektiert und in allen anderen Bereichen Licht nahezu vollständig transmittiert.

Auf ein weiteres Substrat 3' wird das grün reflektierende Schichtsystem in den Bereichen 5 und 5" appliziert, in denen grünes Licht reflektiert werden soll.

Auf eine Seite eines weiteres Substrates 3" wird nun erfindungsgemäß das zweite innere Teilschichtsystem 9' in den Bereichen 5', 5" appliziert, in denen rotes Licht reflektiert werden soll. Es wird die Seite beschichtet, die bei einer Stapelung der Substrate 3, 3' und 3" außen liegt, d.h. zur Luft abschließt. Anschließend wird die strukturiert beschichtete Substratoberfläche des Substrats 3" mit dem zuvor ermittelten weiteren ergänzenden Teilschichtsystem 11' beschichtet, so dass nun die beschichtete Oberfläche des Substrates 3" in den Bereichen 5' und 5" rotes Licht reflektiert und in allen anderen Bereichen Licht nahezu vollständig transmittiert.

Durch diese Schritte entsteht ein Substrat mit blau reflektierenden Bereichen 5, 5', ein Substrat mit rot reflektierenden Bereichen 5', 5" und ein Substrat mit grün reflektierenden Bereichen 5", 5. Die drei Substrate werden nun optisch kontaktiert, zum Beispiel mit einem optischen Kleber 21. Dabei werden die Substrate so angeordnet, dass die Seite, die das blau reflektierende Schichtsystem trägt, den einen Abschluss gegen Luft bildet und die Seite, die das rot reflektierende Schichtsystem trägt, den anderen Abschluss gegen Luft bildet. Die Flächengeometrie der mit reflektierenden Schichtsystemen bedeckten Bereiche der Substrate wird dabei so gewählt, dass beim Übereinanderlegen der Substrate jeweils zwei unterschiedliche Farbfilter in Summe auf einen in einem Bereich transmittierenden Lichtstrahl wirken. Im ersten Bereich 5 wird dann lediglich rotes Licht transmittiert, im zweiten Bereich 5' wird lediglich grünes Licht transmittiert und im dritten Bereich 5" wird lediglich blaues Licht transmittiert. Es kann auch ein vierter Bereich 5"' verwirklicht sein, in dem sämtliches sichtbares Licht transmittiert wird d.h. das Licht lediglich durch das ergänzende Teilschichtsystem 11 und das weitere ergänzende Teilschichtsystem 11' in das Element ein- und austritt.

Bemerkenswert dabei ist, dass sämtliche Strukturierungsprozesse entkoppelt sind und keine der Rückseiten der Substrate beschichtet werden musste.

Die Erfindung wurde anhand lediglich zweier verschiedener Ausführungsformen erläutert. Es sind aber natürlich Variationen auf diese Ausführungsformen möglich und naheliegend. So lassen sich mit diesem Verfahren neben Farbrädern auch Farbtrommeln herstellen, die im Wesentlichen mit strukturierten Farbfiltern versehene Glasröhren sind. Solche Farbtrommeln werden ebenfalls in Projektoren angewendet. Für zwei der Beispiele wurden konkrete Ausführungsformen für Schichtdesigns gegeben. Dabei ist aber zu Berücksichtigen, dass bei der Wahl des Substrates und bei der Wahl der Schichtmaterialien durchaus andere, in Dünnfilmtechnologie bekannte Materialien und auch andere Schichtdickenaufbauten realisiert erfindungsgemäß eingesetzt werden können. Insbesondere können Dünnfilmsysteme auch aus Schichten bestehen, deren Begrenzung nicht an klar definierten Grenzflächen festgelegt werden kann, sondern, die z.B, einen graduellen Übergang des Brechungsindex von der einen Schicht zur benachbarten Schicht aufweisen.

Mit der Erfindung wurde somit erreicht, dass bei der Herstellung strukturierter optischer Elemente im Vergleich zu den bekannten Methoden ein Strukturierungsprozess eingespart werden kann. Erfindungsgemäß erstreckt sich das ergänzende Teilschichtsystem über mehr als einen Bereich. Dadurch wird die Beschichtung insgesamt effizienter und das strukturierte Element wird insbesondere an den Bereichsrändern mechanisch und chemisch stabiler.

Wie erläutert erlaubt eine Ausführungsform der Erfindung die Entkoppelung der Strukturierungsprozesse und damit die Entkoppelung der Ausbeute der einzelnen Prozesse, wodurch die Wirtschaftlichkeit der Herstellung erheblich gesteigert wird.
- 1: strukturiertes optisches Element
- 3: Substrat
- 3': Substrat
- 3": Substrat
- 5: erster Bereich
- 5': zweiter Bereich
- 5 ": dritter Bereich
- 5"': vierter Bereich
- 9: erstes inneres Teilschichtsystem
- 9': zweites inneres Teilschichtsystem
- 9": drittes inneres Teilschichtsystem
- 11: ergänzendes Teilschichtsystem
- 11': weiteres ergänzendes Teilschichtsystem
- 17: Schichtsystem
- 21: optischer Kleber

## Patentansprüche

1. Strukturiertes optisches Element (1) enthaltend ein Substrat (3), dessen Oberfläche einen ersten Bereich (5) und einen zweiten Bereich (5') umfasst und der erste Bereich (5) ein erstes Schichtsystem mit optischer Funktion enthält bestehend aus einem ersten inneren Teilschichtsystem (9) und einem ergänzenden Teilschichtsystem (11) wobei das erste innere Teilschichtsystem (9) mindestens eine Schicht umfasst und sich über den zweiten Bereich (5') nicht erstreckt und das ergänzende Teilschichtsystem (11) mindestens eine Schicht umfasst und sich über den ersten Bereich (5) und über den zweiten Bereich (5') erstreckt und in besagtem zweiten Bereich (5') zumindest Bestandteil ist eines zweiten Schichtsystems mit einer optischen Funktion, die sich von der optischen Funktion des ersten Schichtsystems unterscheidet, wobei besagtes erstes inneres Teilschichtsystem (9) zwischen dem Substrat (3) und besagtem ergänzenden Teilschichtsystem (11) angeordnet ist, wobei die Oberfläche des Substrats (3) im ersten Bereich (5) mit dem ersten Schichtsystem ein erstes optisches Filter bildet, dem ein erster Wellenlängenbereich, bestehend aus einem oder mehreren Wellenlängenintervallen zugeordnet ist und die Oberfläche des Substrats (3) im zweiten Bereich (5') mit einem zweiten Schichtsystem ein zweites optisches Filter bildet, dem ein zweiter, vom ersten optischen Filter abweichender Wellenlängenbereich bestehend aus einem oder mehreren Wellenlängenintervallen zugeordnet ist und die Oberfläche des Substrats (3) mindestens einen weiteren Bereich (5", 5"') umfasst mit mindestens einem weiteren Schichtsystem, das mindestens ein weiteres optisches Filter bildet, dem ein weiterer vom ersten und zweiten optischen Filter abweichender Wellenlängenbereich, bestehend aus einem oder mehreren Wellenlängenintervallen, zugeordnet ist, wobei einer der besagten Wellenlängenbereiche das gesamte Spektrum des sichtbaren Lichts umfasst und jedes optische Filter Licht des ihm zugeordneten Wellenlängenbereichs im wesentlichen transmittiert bzw. reflektiert und Licht eines ihm nicht zugeordneten Wellenlängenbereichs reflektiert respektive transmittiert, wobei das gemeinsame ergänzende Teilschichtsystem (11) in einem Schritt ohne Strukturierungsprozess in allen der vorgenannten Bereichen aufgebracht ist und sämtliche Bereiche abdeckt und dass an der Oberfläche des Substrats (3) in einem der gesagten Bereiche (5, 5', 5", 5"') das ergänzende Teilschichtsystem (11) direkt auf dem Substrat (3) angeordnet ist und dort als Schichtsystem mit optischer Funktion, nämlich als reflexminderndes Schichtsystem ausgebildet ist und dass jeder der genannten Bereiche die gewünschte optische Funktion erst durch die Aufbringung des ergänzenden Teilschichtsystems (11) erreicht.

2. Strukturiertes Farbfilter entsprechend dem strukturiertem optischen Element nach Anspruch 1 **dadurch gekennzeichnet, dass** der erste Wellenlängenbereich im wesentlichen lediglich die dem blauen und grünen Licht entsprechenden Wellenlängen umfasst und der zweite Wellenlängenbereich im wesentlichen lediglich die dem blauen und roten Licht entsprechenden Wellenlängen umfasst und ein weiterer besagter Wellenlängenbereiche im wesentlichen lediglich die dem grünen und roten Licht entsprechenden Wellenlängen umfasst.

3. Strukturiertes optisches Element nach einem der Ansprüche 1 oder 2 **dadurch gekennzeichnet, dass** das erste, das zweite und das gegebenenfalls dritte Schichtsystem auf der Oberfläche des Substrates (3), gegebenenfalls auf beiden Seiten des Substrates (3), so angeordnet sind, dass bei Transmission entlang einer optischen Achse die zumindest angenähert senkrecht auf einer Substratoberfläche steht durch das Substrat (3) das transmittierende Licht durch mindestens zwei der Schichtsysteme mit unterschiedlicher optischer Funktion hindurchtritt.

4. Strukturiertes optisches Farbfilter bestehend aus mindestens zwei, vorzugsweise drei optisch und mechanisch kontaktierten Substraten (3, 3',3") wobei auf mindestens einem der Substrate (3, 3', 3'') strukturierte optische Elemente entsprechend einem der Ansprüche 1 bis 3 ausgebildet sind **dadurch gekennzeichnet, dass** auf keinem besagter Substrate (3, 3', 3") mehr als ein strukturiertes Schichtsystem appliziert ist.

5. Strukturiertes optisches Element nach einem der Ansprüche 1 bis 4 **dadurch gekennzeichnet, dass** das Substrat (3) eine transparente kreisförmige Scheibe, insbesondere ein kreisringförmige Scheibe ist und gegebenenfalls die kontaktierten Substrate (3, 3', 3") eine kreisförmige Scheibe bilden, insbesondere eine kreisringförmige Scheibe bilden und das strukturierte optische Element ein optisches Rad insbesondere ein Farbrad ist.

6. Farbtrommel die ein strukturiertes optisches Element nach einem der Ansprüche 1 bis 3 umfasst, **dadurch gekennzeichnet, dass** die Geometrie des Substrates (3) einem Glaszylinder oder einem Glasrohr entspricht.

7. Verfahren zur Herstellung eines strukturierten optischen Elements nach einem der Ansprüche 1 bis 6 **dadurch gekennzeichnet dass** die Herstellung folgende Schritte umfasst:
a) Ermittlung von Schichtsystemen für mindestens drei Bereiche des Substrats, wobei die Schichtsysteme die in den jeweiligen Bereichen vorgesehene optische Funktion erfüllen und ein gegenüber dem umgebenden Medium abschließendes allen Bereichen identisches Teilschichtsystem bestehend aus eine oder mehrere Schichten umfassen,
b) Zerlegung der Schichtsysteme in bereichsspezifische innere Teilschichtsysteme (9, 9C, 9C',...) und ein allen Bereichen gemeinsames ergänzendes Teilschichtsystem (11), wobei die besagten Schichtsysteme jeweils derart gewählt werden, dass sie folgende Vorgaben erfüllen:
(1) der erste Bereich (5) enthält ein erstes Schichtsystem mit optischer Funktion,
(2) bestehend aus einem ersten inneren Teilschichtsystem (9) und einem ergänzenden Teilschichtsystem (11),
(3) wobei das erste innere Teilschichtsystem (9) mindestens eine Schicht umfasst und sich über den zweiten Bereich (5') nicht erstreckt,
(4) das ergänzende Teilschichtsystem (11) umfasst mindestens eine Schicht und erstreckt sich über den ersten Bereich (5) und über den zweiten Bereich (5') und ist in besagtem zweiten Bereich (5') zumindest Bestandteil eines zweiten Schichtsystems mit einer optischen Funktion, die sich von der optischen Funktion des ersten Schichtsystems unterscheidet,
(5) wobei besagtes erstes inneres Teilschichtsystem (9) zwischen dem Substrat (3) und besagtem ergänzenden Teilschichtsystem (11) angeordnet ist,
(6) wobei die Oberfläche des Substrats (3) im ersten Bereich (5) mit dem ersten Schichtsystem ein erstes optisches Filter bildet, dem ein erster Wellenlängenbereich, bestehend aus einem oder mehreren Wellenlängenintervallen zugeordnet ist,
(7) wobei die Oberfläche des Substrats (3) im zweiten Bereich (5') mit einem zweiten Schichtsystem ein zweites optisches Filter bildet, dem ein zweiter, vom ersten optischen Filter abweichender Wellenlängenbereich bestehend aus einem oder mehreren Wellenlängenintervallen zugeordnet ist,
(8) wobei die Oberfläche des Substrats (3) mindestens einen weiteren Bereich (5", 5"') umfasst mit mindestens einem weiteren Schichtsystem, das mindestens ein weiteres optisches Filter bildet, dem ein weiterer vom ersten und zweiten optischen Filter abweichender Wellenlängenbereich, bestehend aus einem oder mehreren Wellenlängenintervallen, zugeordnet ist,
(9) wobei einer der besagten Wellenlängenbereiche das gesamte Spektrum des sichtbaren Lichts umfasst,
(10)und jedes optische Filter Licht des ihm zugeordneten Wellenlängenbereichs im wesentlichen transmittiert bzw. reflektiert und Licht eines ihm nicht zugeordneten Wellenlängenbereichs reflektiert respektive transmittiert,
c) Applikation der inneren Teilschichtsysteme (9, 9", 9"',...) in den jeweils den inneren Teilschichtsystemen (9, 9', 9",...) zugeordneten Bereichen(5, 5', 5",...) vorzugsweise mittels Vakuumsbeschichtungs- und Lift-Off-Prozessen, und
d) Applikation des ergänzenden Teilschichtsystems (11) über alle Bereichen des Substrates gleichzeitig mittels eines alle Bereiche abdeckenden Beschichtungsschrittes, vorzugsweise mittels eines Vakuumbeschichtungsprozesses, wobei das gemeinsame ergänzende Teilschichtsystem (11) in einem Schritt ohne Strukturierungsprozess in allen der vorgenannten Bereichen appliziert wird, derart, dass an der Oberfläche des Substrats (3) in einem der gesagten Bereiche (5, 5', 5",...) das ergänzende Teilschichtsystem (11) direkt auf das Substrat (3) appliziert wird und dort als Schichtsystem mit optischer Funktion, nämlich als reflexminderndes Schichtsystem ausgebildet ist, wobei jeder der genannten Bereiche die gewünschte optische Funktion erst durch die Aufbringung des ergänzenden Teilschichtsystems (11) erreicht.

8. Verfahren zur Herstellung eines strukturierten optischen Elements **dadurch gekennzeichnet, dass** das Substrat (3) plattenförmig ist und beide Substratoberflächen dem Verfahren nach Anspruch 7 entsprechend mit strukturierten Beschichtungen versehen werden wobei bei der Ermittlung der benötigten Schichtdesigns ausgenutzt wird, dass sich die optischen Funktionen gegenüberliegender Bereiche bei Transmission zu einer optischen Summenfunktion addieren.

9. Verfahren zur Herstellung eines strukturierten optischen Elements **dadurch gekennzeichnet, dass** zwei plattenförmige wenigstens angenähert flächengleiche Substrate (3, 3') auf einer Seite dem Verfahren nach Anspruch 7 entsprechend mit strukturierten Beschichtungen versehen werden und die unbeschichteten Seiten der Substrate optisch und mechanisch kontaktiert werden, vorzugsweise mittels eines optischen Klebers (21), wobei gegebenenfalls zwischen den Substratplatten eine weitere mit einem vorzugsweise strukturierten Schichtsystem (17) versehenen Substratplatte angeordnet wird.

## Claims

1. Structured optical element (1), comprising a substrate (3), the surface of which comprises a first region (5) and a second region (5'), and the first region (5) contains a first layer system with an optical function, consisting of a first internal partial layer system (9) and a supplementary partial layer system (11), wherein the first internal partial layer system (9) comprises at least one layer and does not extend over the second region (5'), and the supplementary partial layer system (11) comprises at least one layer and extends over the first region (5) and the second region (5') and is, in said second region (5'), at least a part of a second layer system with an optical function, which differs from the optical function of the first layer system, wherein said first internal partial layer system (9) is disposed between the substrate (3) and said supplementary partial layer system (11), wherein the surface of the substrate (3) in the first region (5) forms a first optical filter with the first layer system, to which a first wavelength range is assigned, which consists of one or more wavelength intervals, and the surface of the substrate (3) in the second region (5') forms a second optical filter with a second layer system, to which a second wavelength range is assigned, which is different from the first optical filter and consists of one or more wavelength intervals, and the surface of the substrate (3) comprises at least one further region (5", 5"') with at least one further layer system, which forms at least one further optical filter, to which a further wavelength range is assigned, which is different from the first and the second filter and consists of one or more wavelength intervals, wherein one of said wavelength ranges includes the complete spectrum of visible light, and each optical filter substantially transmits or reflects, respectively, light of the wavelength range assigned to it, and reflects or transmits, respectively, light of a wavelength range not assigned to it, wherein the entire supplementary partial layer system (11) is applied in a single step without a structuring process in all of the aforesaid regions and covers all regions, and that, on the surface of the substrate (3), in one of said regions (5, 5', 5", 5"'), the supplementary partial layer system (11) is directly disposed on the substrate and is configured there as a layer system with an optical function, namely as an antireflection layer system, and that each of said regions obtains the desired optical function only by application of the supplementary partial layer system (11).

2. Structured colour filter corresponding to the structured optical element according to claim 1, **characterised in that** the first wavelength range substantially only comprises the wavelengths corresponding to blue and green light, and the second wavelength range substantially only comprises the wavelengths corresponding to blue and red light, and a further said wavelength range substantially only comprises the wavelengths corresponding to green and red light.

3. Structured optical element according to any one of the claims 1 or 2, **characterised in that** the first, the second and the optional third layer system are disposed on the surface of the substrate (3), optionally on both sides of the substrate (3), such that, during transmission through the substrate (3) along an optical axis, which is at least approximately perpendicular to the substrate surface, the transmitting light passes at least through two of the layer systems with different optical functions.

4. Structured optical colour filter, consisting of at least two, preferably three, optically and mechanically contacted substrates (3, 3', 3"), wherein structured optical elements according to any one of the claims 1 to 3 are formed on at least one of the substrates (3, 3', 3"), **characterised in that**, on none of said substrates (3, 3', 3"), more than one structured layer system is applied.

5. Structured optical element according to any one of the claims 1 to 4, **characterised in that** the substrate (3) is a transparent circular disc, in particular an annular disc, and, optionally, the contacted substrates (3, 3', 3") form a circular disc, in particular an annular disc, and the structured optical element is an optical wheel, in particular a colour wheel.

6. Colour drum, comprising a structured optical element according to any one of the claims 1 to 3, **characterised in that** the geometry of the substrate (3) corresponds to a glass cylinder or a glass tube.

7. Method for producing a structured optical element according to any one of the claims 1 to 6, **characterised in that** the production comprises the following steps:
a) determining of layer systems for at least three regions of the substrate, wherein the layer systems fulfil the optical function intended in the respective regions and comprise a partial layer system, which seals against the surrounding medium, is identical in all regions and consists of one or more layers,
b) breaking down the layer systems into region-specific partial layer systems (9, 9C, 9C',...) and a supplementary partial layer system (11) common to all regions, wherein said layer systems are respectively selected such that they meet the following requirements:
(1) the first region (5) contains a first layer system with an optical function,
(2) consisting of a first internal partial layer system (9) and a supplementary partial layer system (11),
(3) wherein the first internal partial layer system (9) comprises at least one layer and does not extend over the second region (5'),
(4) the supplementary partial layer system (11) comprises at least one layer and extends over the first region (5) and the second region (5') and is, in said second region (5'), at least a part of a second layer system with an optical function, which differs from the optical function of the first layer system,
(5) wherein said first internal partial layer system (9) is disposed between the substrate (3) and said supplementary partial layer system (11),
(6) wherein the surface of the substrate (3) in the first region (5) forms a first optical filter with the first layer system, to which a first wavelength range is assigned, which consists of one or more wavelength intervals,
(7) wherein the surface of the substrate (3) in the second region (5') forms a second optical filter with a second layer system, to which a second wavelength range is assigned, which is different from the first optical filter and consists of one or more wavelength intervals,
(8) wherein the surface of the substrate (3) comprises at least one further region (5", 5"') with at least one further layer system, which forms at least one further optical filter, to which a further wavelength range is assigned, which is different from the first and the second filter and consists of one or more wavelength intervals,
(9) wherein one of said wavelength ranges includes the complete spectrum of visible light,
(10) and each optical filter substantially transmits or reflects, respectively, light of the wavelength range assigned to it, and reflects or transmits, respectively, light of a wavelength range not assigned to it,
c) application of the internal partial layer systems (9, 9', 9") in the regions (5, 5', 5",...) respectively assigned to the internal partial layer systems (9, 9', 9",...), preferably by vacuum coating and lift-off processes, and
d) application of the supplementary partial layer system (11) over all regions of the substrate at the same time by means of a coating step covering all regions, preferably by means of a vacuum coating process, wherein the common supplementary partial layer system (11) is applied in a single step without structuring process in all of the aforementioned regions, such that, on the surface of the substrate (3), in one of said regions (5, 5', 5", 5"'), the supplementary partial layer system (11) is directly applied on the substrate (3), and is configured there as a layer system with an optical function, namely as an antireflection layer system, wherein each of said regions obtains the desired optical function only by application of the supplementary partial layer system (11).

8. Method for producing a structured optical element, **characterised in that** the substrate (3) is plate-shaped and both substrate surfaces are provided with structured coatings in accordance with the method according to claim 7, wherein the fact that the optical functions of opposing regions add up to an optical sum function during transmission is utilised in the determination of the required layer design.

9. Method for producing a structured optical element, **characterised in that** two plate-shaped substrates (3, 3') of at least approximately equal area are provided on one side with structured coatings in accordance with the method according to claim 7, and the uncoated sides of the substrates are optically and mechanically contacted, preferably by means of an optical adhesive (21), wherein a further substrate plate provided with a preferably structured layer system (17) is optionally disposed between the substrate plates.

## Revendications

1. Élément optique structuré (1) qui contient un substrat (3), dont la surface inclut une première région (5) et une seconde région (5') et la première région (5) contient un premier système de couches à fonction optique constitué d'un premier système de couches partiel intérieur (9) et d'un système de couches partiel complémentaire (11), tel que le premier système de couches partiel (9) comprend au moins une couche et ne s'étend pas au-dessus de la seconde région (5') et le système de couches partiel complémentaire (11) comprend au moins une couche et s'étend au-dessus de la première région (5) et au-dessus de la seconde région (5') et forme dans ladite seconde région (5') au moins un composant partiel d'un second système de couches à fonction optique, qui diffère de la fonction optique du premier système de couches, dans lequel ledit premier système de couches partiel intérieur (9) est agencé entre le substrat (3) et ledit système de couches partiel complémentaire (11), tel que la surface du substrat (3) dans la première région (5) forme avec le premier système de couches un premier filtre optique auquel est associée une première plage de longueurs d'onde, formée d'un ou plusieurs intervalles de longueurs d'onde, et la surface du substrat (3) dans la seconde région (5') forme avec un second système de couches un second filtre optique auquel est associée une seconde plage de longueurs d'onde, différente de celle du premier filtre optique, formée d'un ou plusieurs intervalles de longueurs d'onde, et la surface du substrat (3) comprend au moins une autre région (5", 5"') avec au moins un autre système de couches qui forme au moins un autre filtre optique auquel est associée une autre plage de longueurs d'onde différente de celles du premier filtre et du second filtre, formée d'un ou plusieurs intervalles de longueurs d'onde, dans lequel l'une desdites plages de longueurs d'onde englobe la totalité du spectre de la lumière visible et chaque filtre optique transmet ou réfléchit sensiblement la lumière de la plage de longueurs d'onde qui lui est associée et réfléchit ou transmet la lumière d'une plage de longueurs d'onde qui ne lui être associée, de sorte que le système de couches partiel complémentaire commun (11) est appliqué, dans une étape sans processus de structuration, dans toutes les régions précitées et recouvre la totalité des régions, et en ce que le système de couches partiel complémentaire (11) est agencé directement sur le substrat (3), à la surface du substrat (3) dans l'une des régions précitées (5, 5', 5", 5"'), et est réalisé à cet endroit à titre de système de couches à fonction optique, à savoir de système de couches réduisant la réflexion, et en ce que chacune des régions précitées assure la fonction optique souhaitée uniquement par l'application du système de couches partiel complémentaire (11).

2. Filtre chromatique structuré correspondant à l'élément optique structuré selon la revendication 1, **caractérisé en ce que** la première plage de longueurs d'onde inclut sensiblement uniquement les longueurs d'onde correspondant à la lumière bleue et à la lumière verte et la seconde plage de longueurs d'onde inclut sensiblement uniquement les longueurs d'onde correspondant à la lumière bleue et à la lumière rouge, et une autre desdites plages de longueurs d'onde inclut sensiblement uniquement les longueurs d'onde correspondant à la lumière verte et à la lumière rouge.

3. Élément optique structuré selon l'une des revendications 1 ou 2, **caractérisé en ce que** le premier, le second et le cas échéant le troisième système de couches sont agencés sur la surface du substrat (2), le cas échéant sur les deux côtés du substrat (3) de telle façon que lors de la transmission le long d'un axe optique qui est au moins approximativement perpendiculaire à une surface du substrat, la lumière transmise à travers le substrat (3) traverse au moins deux des systèmes de couches avec des fonctions optiques différentes.

4. Filtre chromatique optique structuré, comprenant au moins deux, et de préférence trois substrats (3, 3', 3") en contact sur le plan optique et mécanique, dans lequel des éléments optiques structurés correspondant à l'une des revendications 1 à 3 sont réalisés sur l'un au moins des substrats (3, 3', 3"), **caractérisé en ce que** plus d'un système de couches structurées n'est appliqué sur aucun desdits substrats (3, 3', 3").

5. Élément optique structuré selon l'une des revendications 1 à 4, **caractérisé en ce que** le substrat (3) est un disque de forme circulaire transparent, en particulier un disque en forme d'anneau circulaire, et les substrats en contact (3, 3', 3") forment le cas échéant un disque de forme circulaire, en particulier un disque en forme d'anneau circulaire, et l'élément optique structuré est une roue optique, en particulier une roue de couleur.

6. Tambour de couleur qui inclut un élément optique structuré selon l'une des revendications 1 à 3, **caractérisé en ce que** la géométrie du substrat (3) correspond à un cylindre en verre ou un tube en verre.

7. Procédé pour la fabrication d'un élément optique structuré selon l'une des revendications 1 à 6, **caractérisé en ce que** la fabrication inclut les étapes suivantes :
a) détermination de systèmes de couches pour au moins trois régions du substrat, tels que les systèmes de couches assurent la fonction optique prévue dans les régions respectives et comprennent un système de couches partiel, constitué d'une ou plusieurs couches, identique pour toutes les régions et adjacent vis-à-vis du milieu environnant,
b) décomposition des systèmes de couches en systèmes de couches partiels intérieurs (9, 9C, 9C', ...) spécifiques aux régions et en un système de couches partiel complémentaire (11) commun à toutes les régions, dans lequel lesdits systèmes de couches sont respectivement choisis de telle manière qu'ils satisfont les conditions suivantes :
(1) la première région (5) contient un premier système de couches à fonction optique,
(2) constituée d'un premier système de couches partiel intérieur (9) et d'un système de couches partiel complémentaire (11),
(3) tels que le premier système de couches partiel intérieur (9) comprend au moins une couche et ne s'étend pas au-dessus de la seconde région (5'),
(4) le système de couches partiel complémentaire (11) comprend au moins une couche et s'étend au-dessus de la première région (5) et au-dessus de la seconde région (5') et forme dans ladite seconde région (5') au moins un composant partiel d'un second système de couches avec une fonction optique qui diffère de la fonction optique du premier système de couches,
(5) ledit premier système de couches partiel intérieur (9) est agencé entre le substrat (3) et ledit système de couches complémentaire (11),
(6) la surface du substrat (3) dans la première région (5) forme avec le premier système de couches un premier filtre optique auquel est associée une première plage de longueurs d'onde, formée d'un ou plusieurs intervalles de longueurs d'onde,
(7) la surface du substrat (3) dans la seconde région (5') forme avec un second système de couches un second filtre optique auquel est associée une seconde plage de longueurs d'onde différente de celle du premier filtre optique, formée d'un ou plusieurs intervalles de longueurs d'onde,
(8) la surface du substrat (3) comprend au moins une autre région (5", 5"') avec au moins un autre système de couches qui forme au moins un autre filtre optique auquel est associée une autre plage de longueurs d'onde différente de celles du premier filtre et du second filtre optique, formée d'un ou plusieurs intervalles de longueurs d'onde,
(9) de sorte que l'une desdites plages de longueurs d'onde englobe la totalité du spectre de la lumière visible,
(10) et chaque filtre optique transmet ou réfléchit sensiblement la lumière de la plage de longueurs d'onde qui lui est associée et réfléchit ou transmet la lumière d'une plage de longueurs d'onde qui ne lui est pas associée,
c) application des systèmes de couches partiels intérieurs (9, 9", 9"',...) dans les régions (5, 5', 5",...) associées respectivement aux systèmes de couches partiels intérieurs (9, 9', 9", ...), de préférence au moyen de processus de revêtement sous vide ou de processus dit "Lift-Off", et
d) application du système de couches partiel complémentaire (11) pardessus toutes les régions du substrat simultanément au moyen d'une étape de revêtement qui recouvre toutes les régions, de préférence au moyen d'un processus de revêtement sous vide, de sorte que le système de couches partiel complémentaire commun (11) est appliqué dans toutes les régions précitées dans une étape sans processus de structuration, de telle manière que le système de couches partiel complémentaire (11) est appliqué sur le substrat directement sur la surface du substrat (3) dans l'une desdites régions (5, 5', 5", ...) et est réalisé à cet endroit à titre de système de couches à fonction optique, à savoir de système de couches réduisant la réflexion, et chacune des régions précitées remplit la fonction optique souhaitée uniquement à l'application du système de couches partiel complémentaire (11).

8. Procédé pour la fabrication d'un élément optique structuré, **caractérisé en ce que** le substrat (3) est en forme de plaque et les deux surfaces du substrat sont pourvues de revêtements structurés en correspondance du procédé de la revendication 7 et lors de la détermination des conceptions nécessaires pour les couches, on exploite le fait que les fonctions optiques de régions opposées sont additionnées lors de la transmission pour donner une fonction de sommation optique.

9. Procédé pour la fabrication d'un élément optique structuré, **caractérisé en ce que** deux substrats en forme de plaques (3, 3') ayant au moins approximativement des surfaces égales sont pourvus sur un côté de revêtements structurés en correspondance du procédé selon la revendication 7, et les côtés non revêtus du substrat sont mis en contact sur le plan optique et mécanique, de préférence au moyen d'une colle optique (21), et on agence le cas échéant entre les plaques-substrats une autre plaque-substrat dotée d'un système de couches (17) de préférence structuré.
